**Europäisches Patentamt**

**European Patent Office**

**Office européen des brevets**

(19)

(11) Veröffentlichungsnummer: **0 021 057**
A1

(12) # EUROPÄISCHE PATENTANMELDUNG

(21) Anmeldenummer: **80102885.3**

(22) Anmeldetag: **23.05.80**

(51) Int. Cl.³: **F 16 K 1/36,** F 16 K 1/46

**BERICHTIGTE AUSGABE / REVISED EDITION**

**1 1. AUG. 1982**

**ÉDITION REVUE ET CORRIGÉE**

(30) Priorität: **28.05.79 AT 3879/79**

(71) Anmelder: **Klinger AG, Baarerstrasse 10, CH-6301 Zug (CH)**

(43) Veröffentlichungstag der Anmeldung: **07.01.81 Patentblatt 81/1**

(72) Erfinder: **Huber, Richard, Fürstenstrasse 17 b, A-2340 Mödling bei Wien (AT)**

(74) Vertreter: **Blum, Rudolf Emil Ernst et al, c/o E. BLUM & CO. Vorderberg 11, CH-8044 Zürich (CH)**

(84) Benannte Vertragsstaaten: **CH DE FR GB IT LI NL SE**

(54) **Absperrventil.**

(57) Das Tauchkolbenventil weist einen axial zusammen-preßbaren Dichtungsring (2) auf, der ein von unten in Pfeil-richtung durchströmtes Gehäuse (3) abdichtet. Der mit der Ventilspindel (5) verbundene Kolben (1) besteht im wesentlichen aus dem Dichtungsring (2), den beiden ihn einspannenden Kolbenteilen (10, 11) und einem Stützkörper (12) für den zweiten Kolbenteil (11). Der Dichtungsring (2) sitzt in Schließstellung in einer Gehäusebohrung, die mit einer Ver-kleidung (18) versehen ist. Der eine Kolbenteil (10) ist nie-derdruckseitig angeordnet und direkt mit der Spindel gekuppelt. Der andere dünnwandige Kolbenteil (11) ist am ersten Kolbenteil (10) unter Zwischenschaltung des Stütz-körpers (12) befestigt, welcher die Einspannkraft für den Dichtungsring aufbringende Befestigungskraft im Umfang-bereich des Kolbens auf den zweiten Kolbenteil überträgt. Zwischen dem zweiten Kolbenteil (11) und dem Stützkörper (12) ist eine gespannte Tellerfeder (15) eingeschaltet, die bei Setzung und auch ohne Druckverstärkung in geöffnetem Zustand einen erheblichen Teil der axialen Pressung auf-rechterhält. Bei einem solchen Tauchkolbenventil kann ohne gehäuseseitigen Anschlag in Schließstellung die nötige axiale Pressung des Dichtungsringes aufgebracht werden.

0021057

ABSPERRVENTIL
--------------------------------

Die Erfindung betrifft ein Absperrventil mit einem Tauchkolben, bei dem ein axial zusammenpressbarer Dichtungsring zwischen einem ersten spindelseitigen Kolbenteil und einem zweiten dünnwandigen Kolbenteil eingespannt ist, der am spindelseitigen Kolbenteil im Zentrumsbereich befestigt ist und unter Vorspannung auf den Dichtungsring einwirkt. Bei den bekannten Ventilen dieser Art, insbesondere nach der DE-PS 1 929 241, ist der Dichtungsring zwischen zwei elastisch verformbaren Kolbenteilen eingespannt, die den Dichtungsring in jeder Kolbenstellung unter einer gewissen Vorspannung halten. Die zum sicheren Abdichten notwendige axiale Pressung des Dichtungsringes wird dadurch erreicht, dass am Ende der Schliessbewegung der zweite untere Kolbenteil an einem gehäuseseitigen Anschlag zur Ruhe kommt und bei Weiterbewegen der Spindel der erste Kolbenteil unter Entlastung des zweiten Kolbenteiles stärker vorgespannt wird, wodurch der Dichtungsring zwischen dem ersten Kolbenteil und dem gehäuseseitigen Anschlag eingespannt ist.

Die Erfindung zielt darauf ab, ein Kolbenventil dieser Art zu schaffen, bei dem ohne gehäuseseitigen Anschlag in Schliessstellung die nötige axiale Pressung des Dichtungsringes aufgebracht werden kann. Eine solche Bauweise ist dann notwendig, wenn entweder die Ventilspindel knapp dimensioniert werden muss, oder wenn am Tauchkolben niederdruckseitig ein zusätzlicher fester Dichtsitz gegen das Gehäuse ausgebildet werden soll, der nur dann wirksam ist, wenn er die einzige Anschlagstelle des Kolbens am Gehäuse bildet.

Die Erfindung geht von dem Gedanken aus, bei den bekannten Ventilen den zweiten, dünnwandigen Kolbenteil mit dem Druck des abzusperrenden Mediums zu beaufschlagen und verwendet die Erkenntnis, dass die damit erzielbare zusätzliche axiale Pressung des Dichtungsringes dann ausreichend ist, wenn der Ring bereits vor Eintauchen in den Ventilsitz unter erheblicher axialer Vorpressung steht. Bei Ventilen der eingangs geschilderten Art ist diese grosse axiale Vorpressung nicht aufbringbar, weil der zweite Kolbenteil beim Zusammenbau der Verformung durch den ersten Kolbenteil möglichst wenig Widerstand entgegensetzen darf, damit die Spannung des elastisch verformbaren ersten Kolbenteiles beim Schliessen mit möglichst geringen Kräften und langen Federwegen möglich ist.

Ein gemäss der Erfindung ausgebildetes Absperrventil mit Tauchkolben ist im wesentlichen dadurch gekennzeichnet, dass der erste Kolbenteil niederdruckseitig angeordnet, direkt mit der Spindel gekuppelt ist und der zweite, hochdruckseitige Kolbenteil am ersten unter Zwischenschaltung eines Stützkörpers befestigt ist, welcher die die Einspannkraft für den Dichtungsring aufbringende Befestigungskraft im Umfangsbereich des Kolbens auf den zweiten Kolbenteil überträgt. Auf diese Weise ist gewährleistet, dass der Dichtungsring stark eingespannt ist, wobei nach Eintauchen des Kolbens in seinen Sitz durch die Einwirkung des abzusperrenden Mediums auf den zweiten Kolbenteil eine zusätzliche axiale Pressung des Dichtungsringes erzielt wird, ohne dass ein Anschlag des Kolbens am Gehäuse erforderlich ist. Die Vorsehung eines Stützkörpers bewirkt an der hochdruckseitigen Einspannstelle des Dichtungsringes eine Aufgabenteilung: Der Stützkörper ermöglicht die Uebertragung der Befestigungskraft an die Einspannstelle für den Dichtungsring, wodurch der zweite Kolbenteil so schwach dimensioniert werden kann, dass er eine weiche Federcharakteristik aufweist und daher auch über grössere Verformungswege des Dichtungsringes dem Mediumsdruck keinen Widerstand entgegensetzt, weil er noch immer eine Vorspannung in Richtung gegen den Dichtungsring aufweist.

Diese Vorspannung kann auch dadurch verstärkt werden, dass zwischen Stützkörper und dünnwandigem zweiten Kolbenteil eine vorgespannte Feder eingeschaltet ist.

Der dünnwandige zweite Kolbenteil kann scheibenartig ausgebildet werden; dann muss die nötige Abdichtung gegen den Dichtungsring an der hochdruckseitigen Stirnseite des Dichtungsringes erzielt werden, was nur bei weichen Dichtungsringen sicher möglich ist. Vorteilhaft weist der dünnwandige zweite Kolbenteil einen zylindrischen Abschnitt zur Aufnahme des Dichtungsringes an seiner Innenbohrung auf, wodurch eine sichere Dichtverbindung zwischen Dichtungsring und zweiten Kolbenteil gewährleistet ist, so dass die Druckverstärkung bei Eintauchen des Kolbens in seinen Sitz sicher gewährleistet ist.

Die Erfindung wird nun anhand der Zeichnung beispielsweise näher erläutert. Es zeigen:

Fig. 1 ein Tauchkolbenventil;

Fig. 2 ein Detail des Tauchkolbenventils nach Fig. 1;

Fig. 3 eine erste Modifikation des Details nach Fig. 2, und

Fig. 4 eine zweite Modifikation des Details nach Fig. 2

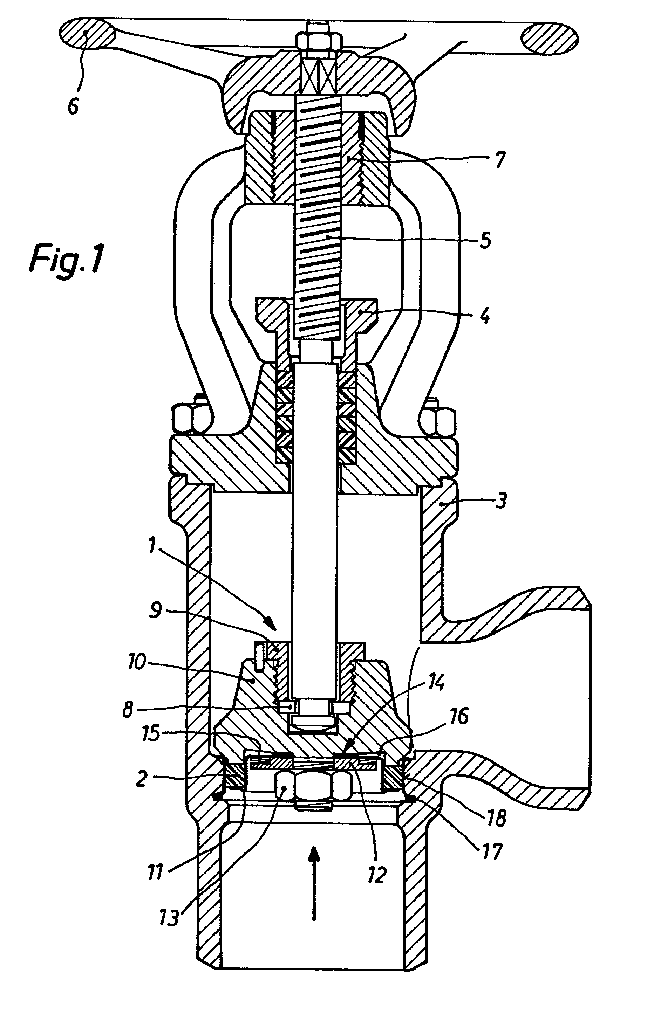

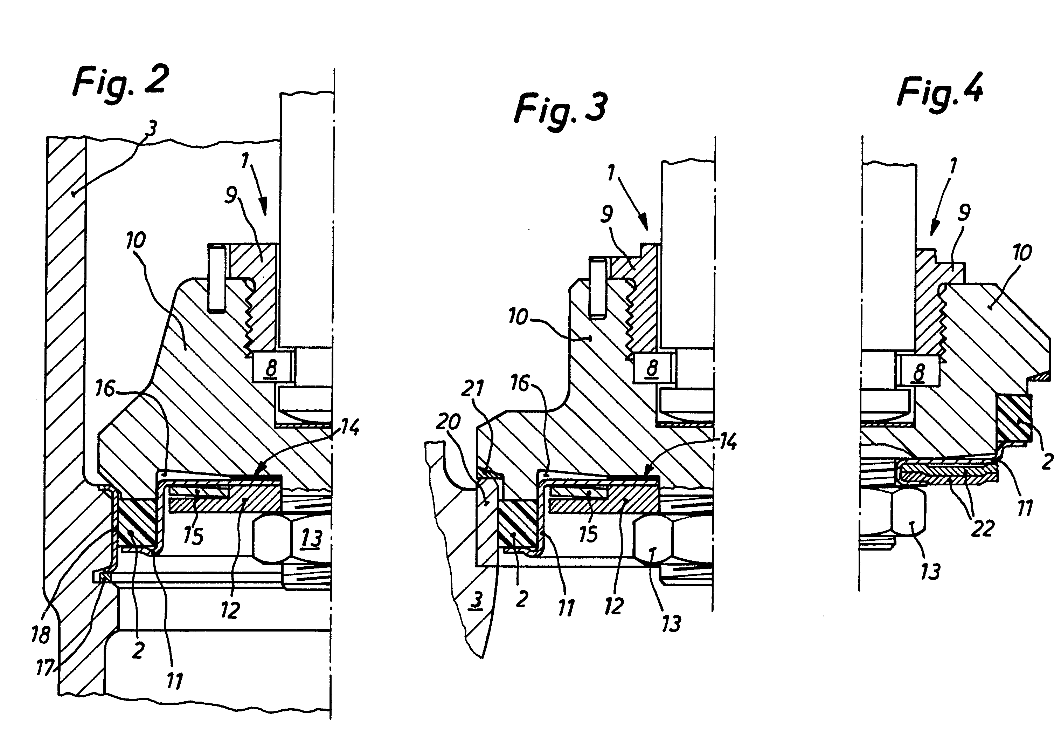

Bei dem in den Fig. 1 und 2 dargestellten Tauchkolbenventil nach der Erfindung dichtet der im Kolben 1 angeordnete Dichtungsring 2 gegen ein von unten in Pfeilrichtung durchströmtes Gehäuse 3 ab, das durch ein Gehäuseoberteil 4 verschlossen ist, in dem eine mit dem Kolben 1 verbundene Ventilspindel 5 durch Verdrehen in einer Gewindemutter 7 mittels Handrad 6 axial verschiebbar ist. Der mit der Ventilspindel 5 über einen zweiteiligen Ring 8 und eine Verschraubung 9 verbundene Kolben 1 besteht im wesentlichen aus dem Dichtungsring 2, den beiden ihn einspannenden Kolbenteilen 10,11 und einem Stützkörper 12 für den zweiten Kolbenteil 11. Der Dichtungsring sitzt in Schliessstellung in einer Gehäusebohrung, die über eine Dichtung 17 mit einer korrosionsfesten Auskleidung 18 versehen ist, die im oberen Bereich nach aussen abgebogen auch am Gehäuse abstützt und dort einen elastischen Sitz für den ersten Kolbenteil bildet. Es ist jedoch nicht unbedingt notwendig, den ersten Kolbenteil in seiner Schliessstellung an einem Sitz abzustützen.

Am ersten Kolbenteil 10 ist mittels einer Befestigungsmutter 13 der aus Blech gefertigte zweite Kolbenteil 11 unter Einschaltung einer Flachdichtung 14 dicht verbunden. Zwischen Mutter 13 und zweitem Kolbenteil 11 ist noch der scheibenförmige Stützkörper 12 eingeschaltet, der bis knapp an den zylindrischen Teil des zweiten Kolbenteiles 11 heranreicht. Der ebene Boden des zweiten Kolbenteiles 11 ist im nicht eingebauten Zustand gegen die Mitte zu konisch nach unten abgesenkt, so dass beim Zusammenschrauben der über die Mutter 13 am ersten Kolbenteil zu befestigenden Teile 11, 12 und 14 der Boden sich eben an den Stützkörper 12 anlegt. Dabei kann der Dichtungsring 2 so stark eingespannt werden, als es in Offenstellung des Kolbens ohne unzulässige Ausbauchung des Dichtungsringes möglich ist. Zusätzlich übt der zweite Kolbenteil 11 infolge seiner Verformung beim Zusammenbau zusätzlich eine geringe Einspannkraft aus. Der gesamten Einspannkraft überlagert sich im Schliesszustand eine durch die Beaufschlagung des dünnwandigen zweiten Kolbenteiles bedingte Kraft, der ausserhalb seiner Einspannstelle infolge der Abdichtung gegen den Dichtungsring membranartig zur Wirkung kommen kann. Auf diese Weise ist die nötige axiale Pressung des Dichtungsringes für den Abschluss des Ventiles gewährleistet. Für den Fall hoher Beanspruchungen, insbesondere hoher Temperaturen, welche zu erheblichen Setzungen des Dichtungsringes führen können, ist zwischen dem zweiten Kolbenteil 11 und dem Stützkörper 12 eine gespannte Tellerfeder 15 eingeschaltet, die bei Setzung auch ohne Druckverstärkung in geöffnetem Zustand einen erheblichen Teil der axialen Pressung aufrechterhält. Um die freie Bewegung des Bodens des zweiten Kolbenteiles zuzulassen, ist der erste Kolbenteil (bei 16) entsprechend ausgenommen.

Beim erfindungsgemässen Tauchkolbenventil ist also gewährleistet, dass ohne gehäusefesten Anschlag der Dichtungsring zum Ausgleich von Wärmedehnungen und Ringschrumpfungen ständig unter axialer Pressung steht, die in Schliessstellung abhängig vom Druck des abzusperrenden Mediums vergrössert wird. Da kein Gehäuseanschlag erforderlich ist, kann der erste Kolbenteil zur Ausbildung eines zusätzlichen harten Ventilsitzes herangezogen werden.

Die Fig. 3 zeigt eine Ausführung, bei der in der Schliessstellung der erste Kolbenteil 10 zuverlässig dicht auf einem gehäusefesten Sitz abgestützt werden kann. Zu diesem Zweck ist anstelle der Auskleidung 18 in der

Gehäusebohrung eine Büchse 20 aus Hartmetall eingesetzt und am ersten Kolbenteil 10 ist ein Ring 21 ebenfalls aus Hartmetall fest angebracht. In der Schliesstellung liegt der erste Kolbenteil 10 mit seinem Ring 21 an der Büchse 20 auf, und man erhält damit eine zusätzliche Abdichtung. Im übrigen entspricht die Ausführung nach Fig. 3 der Ausführung nach den Fig. 1 und 2 und gleiche Teile sind mit den gleichen Bezugsziffern versehen.

Die Fig. 4 zeigt eine abgeänderte Ausbildung des zweiten Kolbenteiles 11. Der aus Blech gefertigte zweite Kolbenteil 11 ist hier scheibenartig ausgebildet. Als Stützkörper für den zweiten Kolbenteil 11 dienen zwei Federscheiben 22. An seinem inneren Umfang ist der zweite Kolbenteil 11 um die beiden Federscheiben 22 umgebördelt. Eine solche Umbördelung der Federscheiben ist aber nicht unbedingt notwendig.

Im übrigen entspricht der Aufbau im wesentlichen demjenigen nach den Fig. 1 und 2 und gleiche bzw. ähnliche Teile sind mit gleichen Bezugsziffern versehen.

0021057

- 1 -

P A T E N T A N S P R Ü C H E

------------------------------

1. Absperrventil mit einem Tauchkolben, bei dem ein axial zusammenpressbarer Dichtungsring zwischen einem ersten spindelseitigen Kolbenteil und einem zweiten dünnwandigen Kolbenteil eingespannt ist, der am spindelseitigen Kolbenteil im Zentrumsbereich befestigt ist und unter Vorspannung auf den Dichtungsring einwirkt, dadurch gekennzeichnet, dass der erste Kolbenteil niederdruckseitig angeordnet, direkt mit der Spindel gekuppelt ist und der zweite, hochdruckseitige Kolbenteil am ersten unter Zwischenschaltung eines Stützkörpers befestigt ist, welcher die die Einspannkraft für den Dichtungsring aufbringende Befestigungskraft im Umfangsbereich des Kolbens auf den zweiten Kolbenteil überträgt.

2. Absperrventil nach Anspruch 1, dadurch gekennzeichnet, dass zwischen Stützkörper und dünnwandigem zweiten Kolbenteil eine vorgespannte Feder eingeschaltet ist.

3. Absperrventil nach Anspruch 1 oder 2, dadurch gekennzeichnet, dass der dünnwandige zweite Kolbenteil in an sich bekannter Weise einen zylindrischen Abschnitt zur Aufnahme des Dichtungsringes an seiner Innenbohrung

RM/str
13.5.1980

EU 1049

- 2 -

aufweist.

4. Absperrventil nach Anspruch 1, dadurch gekennzeichnet, dass der Stützkörper eine vorgespannte Feder ist.

0021057

Fig.1

Fig. 2

Fig. 3

Fig. 4

2/2

0021057

Europäisches
Patentamt

**EUROPÄISCHER RECHERCHENBERICHT**

0021057

Nummer der Anmeldung

EP 80 10 2885

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| A | FR - E - 84 490 (LE MOUILLOUR) <br> * Patentanspruch 1; Abbildungen * <br><br> -- | | F 16 K 1/36 <br> 1/46 |
| A | GB - A - 731 636 (GROVE) <br> * Seite 4, Zeile 74 - Seite 5, Zeile 104; Abbildungen 6-10 * <br><br> -- | | |
| A | FR - A - 2 332 468 (EGLOFF) <br> * Patentanspruch 1; Abbildungen * <br><br> ---- | | RECHERCHIERTE SACHGEBIETE (Int. Cl. 3) <br><br> F 16 K |

KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 06-10-1980 | V. REETH |

EPA form 1503.1   06.78